# EUROPEAN PATENT SPECIFICATION

(11) **EP 2 808 305 B1**
(45) Date of publication and mention of the grant of the patent: **03.01.2018**
(21) Application number: 14162523.6
(22) Date of filing: 31.03.2014
(51) Int. Cl.: C02F 3/12, C02F 3/30

(54) **Method of biological wastewater treatment**
Verfahren zur biologischen Wasserbehandlung
Procédé de traitement biologique de l'eau usée

(30) Priority: 27.05.2013 PL 40408713
(43) Date of publication of application: 03.12.2014
(73) Proprietor: Slusarczyk, Jerzy, 60-480 Poznan (PL)
(72) Inventor: Slusarczyk, Jerzy, 60-480 Poznan (PL)
(74) Representative: Sielewiesiuk, Jakub

(56) References cited:
- WO-A1-88/08410
- CN-A- 101 279 793
- US-A- 4 162 153
- US-A1- 2010 163 482

## Description

The object of the invention is a method of biological wastewater treatment which can be used in municipal management as well as in various branches of industry and agriculture for treating sanitary and industrial wastewaters, and their derivatives in terms of composition, comprising biodegradable substances.

There are many methods of biological wastewater treatment. Advanced methods, which are now already widespread, are those in which both nitrogen and phosphorus are removed from wastewater.

Bardenpho and UCT methods are the most widespread in Poland as well as in other countries among the known methods. There are also extensions and improvements thereof, such as MUCT or modified and 5-chamber Bardenpho. Bardenpho method and three-stage method of biological wastewater treatment, referred to as UCT, define a reference point for the invention applied.

In the Bardenpho method, raw wastewater is brought to an anaerobic zone located at the beginning of zone sequence of the reactor, or to devices which precede it. Then, this wastewater is directed to an anoxic zone, and afterwards to an aerobic zone which constitutes an outflow of the biological reactor. Once left the bioreactor, the wastewater together with sludge are directed to a secondary settling tank where the treated wastewater is separated from the sludge which sediments on the bottom of the secondary settling tank. The treated wastewater is discharged outside the system, and an excess sludge located on the bottom of the secondary settling tank is also discharged outside the system. The process requires an external recirculation which consists in passing the undischarged part of the wastewater together with the sludge, which accumulated in the secondary settling tank, to the anaerobic zone, as recirculated sludge. An internal recirculation is also conducted, and it consists in returning a part of the aerobic zone content to the anoxic zone. A similar process is disclosed in US4162153 and in US 2010/163482. In the Bardenpho method, oxygen concentration in the anaerobic zone is maintained in the range of 0.0 - 0.1 mg/l, and the time of wastewater retention is maintained in the range of 1.0 - 2.0 h, and in the anoxic zone, oxygen concentration is maintained in the range of 0.1 - 0.5 mg/l, and the time of wastewater retention is maintained in the range of 2.0 - 4.0 h, and in the aerobic zone, oxygen concentration is maintained in the range of 2.0 - 3.0 mg/l, and the time of wastewater retention is maintained in the range of 4.0 - 12.0 h.

In the UCT method, a biological reactor comprising three zones, in the system, which are an anaerobic zone, an anoxic zone and an aerobic zone, is used. The UCT method differs from the previous one (Bardenpho) in the recirculation process. In this method, the wastewater is brought to the anaerobic zone located at the beginning of the reactor. In the process of external recirculation, sludge from the secondary settling tank is brought at the beginning of the anoxic zone, whereas, during the internal recirculation, the content of the anoxic zone is passed into the anaerobic zone. In the UCT method, oxygen concentration in the anaerobic zone is maintained in the range of 0.0 - 0.1 mg/l, and the time of wastewater retention is maintained in the range of 1.0 - 2.0 h, and in the anoxic zone, oxygen concentration is maintained in the range of 0.1 - 0.5 mg/l, and the time of wastewater retention is maintained in the range of 2.0 - 4.0 h, and in the aerobic zone, oxygen concentration is maintained in the range of 2.0 - 3.0 mg/l, and the time of wastewater retention is maintained in the range of 4.0 - 12.0 h.

Treated wastewater and excess sludge are the products of the known methods of biological wastewater treatment.

Biogenic elements, such as nitrogen and phosphorus, discharged with the treated wastewater, cause pollution and degradation of biological environment, therefore, their discharge to the aquatic ecosystem is standardised and strictly limited by relevant national and EU provisions. These provisions become more and more restrictive, in particular for large agglomerations. Their strict observance constitutes a large challenge for wastewater treatment plants.

In turn, excess sludge constitutes a heavy burden for environment, due to the high concentration of harmful chemical substances, and especially biological substances. Its storage leads to a secondary pollution of the environment and the need to use additional land. Treatment and disposal of excess sludge requires the use of devices for its processing, storage, use of reagents applied in the processing of wastewater sludge, and reconstruction of land for sludge storage areas. Storage and possible use of the excess sludge formed in the process of wastewater treatment are governed by more and more restrictive national and EU provisions. This sludge becomes a big technical and economic problem because its treatment, storage and disposal entail high costs.

The object of the invention is a significant reduction in the discharge of biogenic elements (nitrogen, phosphorus) into the environment, a significant reduction or complete elimination of chemical reagents used in the process of wastewater treatment, and a reduction of the amount of wastewater sludge generated and disposed of.

According to the invention, the method of biological wastewater treatment, in which a biological reactor comprising anaerobic, anoxic and aerobic zones sequentially connected to each other is used, wherein raw wastewater is brought to the anaerobic zone located at the beginning of the said zone sequence of the reactor, or in part or in its entirety to the zone preceding it, then, the wastewater is directed to the anoxic zone and eventually to the aerobic zone, afterwards, in the process of internal recirculation, a part of the aerobic zone content is returned to the anoxic zone, and the rest of the wastewater from the aerobic zone is directed together with the sludge, directly or through additional zones, to a secondary settling tank where the treated wastewater is separated from the sludge which sediments on the bottom of the secondary settling tank, and the treated wastewater and excess sludge located on the bottom of the secondary settling tank are discharged outside the secondary settling tank, and the rest of the sludge accumulated in the secondary settling tank is passed to the anoxic zone in the process of external recirculation, characterised in that, between the anoxic zone and the aerobic zone, a medium-aerobic zone is maintained, where residence time of wastewater is selected from 2.0 to 8.0 hours, and oxygen concentration is maintained in the range of 0.6 to 1.3 mg O₂/litre. In the course of the process, oxygen concentration in the aerobic zone is maintained in the range of 1.7 to 4.0 mg O₂/litre and oxygen concentration in the anoxic zone is maintained in the range of 0.1 to 0.6 mg O₂/litre. According to another preferred characteristic of the invention, residence time of wastewater in the aerobic zone is selected from 1.0 to 4.0 hours. According to another preferred characteristic of the invention, the flow of the sludge recirculated from the secondary settling tank is controlled in an appropriate proportion to the layer of sludge suspended above the bottom of the secondary settling tank, this layer being maintained above 30% of the useful volume of this settling tank. According to yet another preferred characteristic of the invention, density of the active sludge in the bioreactor is maintained in the range of 4.0 to 9.0 g/l.

Use of the method according to the invention allows obtaining two groups of significant savings. The first group includes a significant reduction in environmental burden of toxic and burdensome substances and a reduction in the need for land surface used for the storage and disposal of excess sludge. The reduction in environmental burden is achieved not only by reducing the amount of nitrogen and phosphorus in the treated wastewater by about 30 - 60 %, reducing the amount of the removed excess sludge by 30 - 50 %, but also by abandoning the use of chemical additives, insoluble ingredients oh which, such as for example heavy metals, increase the toxic load in the removed sludge. For example, 1 kg of PIX preparation contains about 300 mg of manganese, 0.5 mg of lead, 0.5 mg of cadmium, 1 mg of copper, 5 mg of chromium, 25 mg of nickel, 20 mg of zinc (data from "Oczyszczanie ścieków naturalnymi zeolitami w systemie SBR" (*eng. "Wastewater treatment by means of natural zeolite in the SBR system"*) - Koszalin University of Technology). The preparations added also increase the overall weight of the excess sludge, and a certain amount of them or of their decomposition products can be raised together with the treated wastewater and thereby pollute the environment. The second group includes measurable economic savings on the cost of chemical reagents consumed and on the costs of treatment, disposal, transport and storage of significantly reduced amount of excess sludge. Savings on the electrical energy consumed are also possible.

The invention can be used in a newly built facility - wastewater treatment plant, and already existing facilities can be adapted In particular, they can be facilities built for the commonly used methods: BARDENPHO, UCT, and others not mentioned herein. The only condition for using the invention is a physical possibility of its implementation in the facility. This comes down to the possibility of providing the required zones in the biological reactor. For this, in turn, possibility of aeration (oxygenation) of the zones is required, which, in any case, is present in all biological reactors operated with the Bardenpho, UCT methods and those derived thereof. Other zones and devices present before or after the said zone sequence do not limit or interfere with the invention. Other, additional recirculation possibilities present in the facility do not limit or interfere with the invention.

The method according to the invention will be explained in more detail by exemplary embodiments thereof illustrated in the drawings, in which:

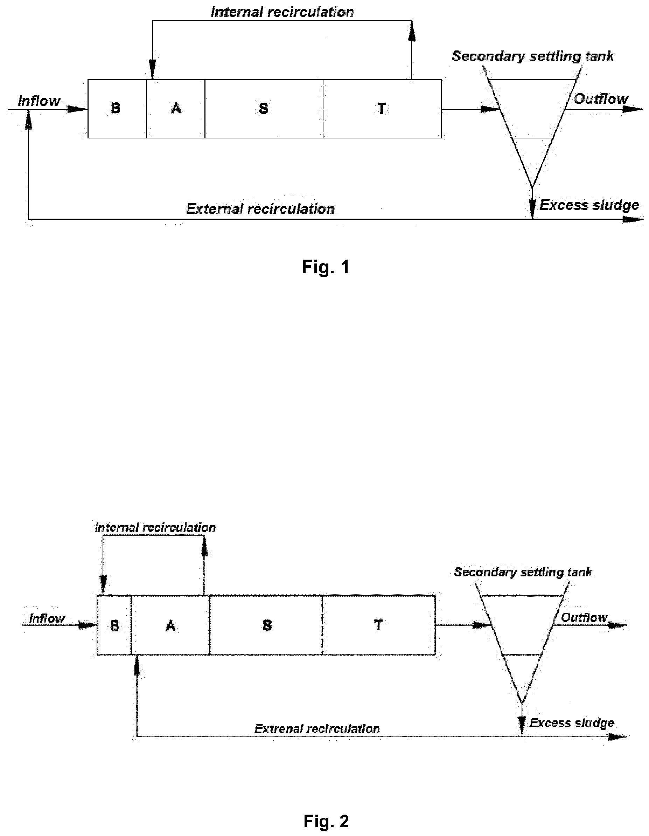

- Fig. 1: shows a block diagram of the course of the first and second embodiments of the method according to the invention in a reactor built for the Bardenpho method of wastewater treatment;
- fig. 2: shows a block diagram of the course of the third embodiment of the method according to the invention in a reactor built for the UCT method;

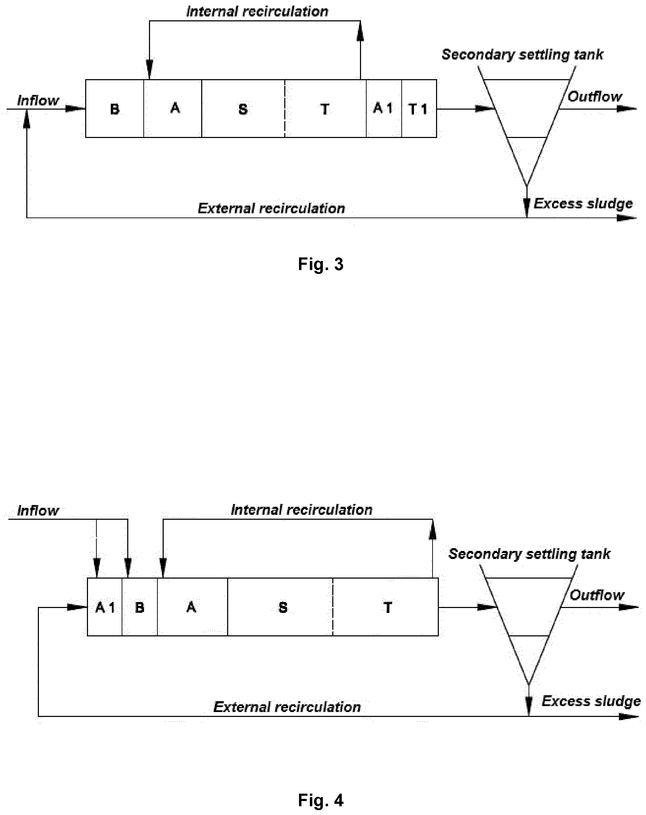

- fig. 3: shows a block diagram of the course of the fourth embodiment of the method according to the invention in a reactor built for the Bardenpho 5-stage method;
- fig. 4: shows a block diagram of the course of the fifth embodiment of the method according to the invention in a reactor built for the modified Bardenpho method.

### Example 1:

In a reactor built for the Bardenpho method, raw wastewater is brought to an anaerobic zone B, located at the beginning of the said zone sequence of the reactor, and then the wastewater is directed to an anoxic zone A and a medium-aerobic zone S sequentially, and eventually the wastewater is directed to an aerobic zone T constituting an outflow of the biological reactor - bioreactor. Once left the bioreactor, the wastewater together with sludge flow to a secondary settling tank where the treated wastewater is separated from the sludge which sediments on the bottom of the secondary settling tank. The treated wastewater and excess sludge, located on the bottom of the secondary settling tank, are discharged outside the secondary settling tank. In the course of the process, an external recirculation is conducted, which consists in passing the undischarged part of the wastewater together with the sludge, which accumulates in the secondary settling tank, to the anaerobic zone B, and an internal recirculation is also conducted, which consists in returning a part of the content of the aerobic zone T to the anoxic zone A. During the process, residence time of wastewater in the medium-aerobic zone S is set to about 2.0 hours, and oxygenation is maintained in the range of 0.6 - 0.8 mg of O₂/litre, whereas residence time of wastewater in the aerobic zone T is set to about 3.5 - 4.0 hours, and oxygenation in the range of 3.5 - 4.0 mg of O₂/litre. In the anoxic zone A, oxygenation resulting from natural biological processes and from recirculation rate (in this zone, there is not any forced oxygenation), which is maintained in the range of 0.1 - 0.6 mg of O₂/litre, is used. The selection of specific values of operating parameters for the zones, in particular for the medium-aerobic zone S, is made based on the characteristics of the wastewater brought. Internal and external recirculations are selected so that scheduled residence times in each zone can be obtained depending on the amount of wastewater incoming to the wastewater treatment plant. Level of the sludge maintained in the secondary settling tank should be 30 % or more of its active volume. Density of the active sludge is set depending on the amount of BOD₅ load brought together with the wastewater, within 4.0 and 9.0 g/l.

### Example 2:

In a reactor built for the Bardenpho method, raw wastewater is brought to an anaerobic zone B, located at the beginning of the said zone sequence of the reactor, and then the wastewater is directed to an anoxic zone A and a medium-aerobic zone S sequentially, and eventually the wastewater is directed to an aerobic zone T constituting an outflow of the biological reactor - bioreactor. Once left the bioreactor, the wastewater together with sludge flow to a secondary settling tank where the treated wastewater is separated from the sludge which sediments on the bottom of the secondary settling tank. The treated wastewater and excess sludge, located on the bottom of the secondary settling tank, are discharged outside the secondary settling tank. In the course of the process, an external recirculation is conducted, which consists in passing the undischarged part of the wastewater together with the sludge, which accumulates in the secondary settling tank, to the anaerobic zone B, and an internal recirculation is also conducted, which consists in returning a part of the content of the aerobic zone T to the anoxic zone A. During the process, residence time of wastewater in the medium-aerobic zone S is set to about 7.0 hours, and oxygenation is maintained in the range of 1.1 - 1.3 mg of O₂/litre, whereas residence time of wastewater in the aerobic zone T is set to about 3.5 - 4.0 hours, and oxygenation in the range of 3.0 - 3.5 mg of O₂/litre. In the anoxic zone A, oxygenation resulting from natural biological processes and from recirculation rate (in this zone, there is not any forced oxygenation), which is maintained in the range of 0.1 - 0.6 mg O₂/litre, is used. The selection of specific values of operating parameters for the zones, in particular for the medium-aerobic zone S, is made based on the characteristics of the wastewater brought. Internal and external recirculations are selected so that scheduled residence times in each zone can be obtained depending on the amount of wastewater incoming to the wastewater treatment plant. Level of the sludge maintained in the secondary settling tank should be 30 % or more of its active volume. Density of the active sludge is set depending on the amount of BOD₅ load brought together with the wastewater, within 4.0 and 9.0 g/l.

### Example 3:

In a reactor built for the UCT method, raw wastewater is brought to an anaerobic zone B, located at the beginning of the said zone sequence of the reactor, and then the wastewater is directed to an anoxic zone A and a medium-aerobic zone S sequentially, and eventually the wastewater is directed to an aerobic zone T constituting an outflow of the biological reactor - bioreactor. Once left the bioreactor, the wastewater together with sludge are brought to a secondary settling tank where the treated wastewater is separated from the sludge which sediments on the bottom of the secondary settling tank. The treated wastewater and excess sludge, located on the bottom of the secondary settling tank, are discharged outside the secondary settling tank. In the course of the process, an external recirculation is conducted, which consists in passing the undischarged part of the wastewater together with the sludge, which build up in the secondary settling tank, to the anoxic zone A, and farther, through the latter, in the process of internal recirculation, to the anaerobic zone (B). During the process, residence time of wastewater in the medium-aerobic zone S is set to about 2 hours, and oxygenation is maintained in the range of 0.6 - 0.8 mg of O₂/litre, whereas residence time of wastewater in the aerobic zone T is set to about 1.5 - 2.5 hours, and oxygenation in the range of 3.0 - 3.5 mg O₂/litre. In the anoxic zone A, oxygenation is maintained in the range of 0.1 - 0.6 mg O₂/litre. The selection of specific values of operating parameters for the zones, in particular for the medium-aerobic zone S, is made based on the characteristics of the wastewater brought. Internal and external recirculations are selected so that scheduled residence times in each zone can be obtained depending on the amount of wastewater incoming to the wastewater treatment plant. Level of the sludge maintained in the secondary settling tank should be 30 % or more of its active volume. Density of the active sludge is set depending on the amount of BOD₅ load brought together with the wastewater, within 4.0 and 9.0 g/l.

### Example 4:

In a reactor built for the Bardenpho 5-stage method, raw wastewater is brought to an anaerobic zone B, located at the beginning of the said zone sequence of the reactor. Then, the wastewater flows to an anoxic zone A and a medium-aerobic zone S sequentially, and eventually the wastewater flows to an aerobic zone T. Before leaving the biological reactor, two additional zones were added: an anoxic one A1 and an aerobic one T1, the task of which is to support the process of wastewater treatment to eliminate nitrogen compounds from it. Once left the bioreactor, the wastewater together with sludge flow to a secondary settling tank where the treated wastewater is separated from the sludge which sediments on the bottom of the secondary settling tank. The treated wastewater and excess sludge, located on the bottom of the secondary settling tank, are discharged outside the secondary settling tank. During the process, an external recirculation is conducted, which consists in passing the undischarged part of the wastewater together with the sludge, which accumulates in the secondary settling tank, to the anaerobic zone B, and an internal recirculation is also conducted, which consists in returning a part of the content of the aerobic zone T to the anoxic zone A. During the process, residence time of wastewater in the medium-aerobic zone S is set to about 6.0 hours, and oxygenation is maintained in the range of 1.1 - 1.3 mg of O₂/litre, whereas residence time of wastewater in the aerobic zone T is set to about 3.5 - 4.0 hours, and oxygenation in the range of 3.0 - 3.5 mg O₂/litre. In the anoxic zone A, oxygenation is maintained in the range of 0.1 - 0.6 mg O₂/litre. The selection of specific values of operating parameters for the zones, in particular for the medium-aerobic zone S, is made based on the characteristics of the wastewater brought. Internal and external recirculations are selected so that scheduled residence times in each zone can be obtained depending on the amount of wastewater incoming to the wastewater treatment plant. Level of the sludge maintained in the secondary settling tank should be 30 % or more of its active volume. Density of the active sludge is set depending on the amount of BOD₅ load brought together with the wastewater, within 4.0 and 9.0 g/l.

### Example 5:

In a reactor built for the modified Bardenpho method, raw wastewater is brought in part to an anaerobic zone B, located at the beginning of the said zone sequence of the reactor, and the rest of it is directed to an additional anoxic zone A1 preceding it. Introduction of this additional zone aims at reducing the amount of nitrates in the wastewater returning in the process of external recirculation to the anaerobic zone B, and then it is directed to an anoxic zone A, and a medium-aerobic zone S sequentially, and eventually the wastewater is directed to an aerobic zone T constituting an outflow of the biological reactor. Once left the bioreactor, the wastewater together with sludge flow to a secondary settling tank where the treated wastewater is separated from the sludge which sediments on the bottom of the secondary settling tank. The treated wastewater and excess sludge, located on the bottom of the secondary settling tank, are discharged outside the secondary settling tank. In the course of the process, an external recirculation is conducted, which consists in passing the undischarged part of the wastewater together with the sludge, which build up in the secondary settling tank, to the anaerobic zone B, via the additional anoxic zone A1 placed at the beginning of the reactor. An internal recirculation is also conducted, and it consists in returning a part of the content from the aerobic zone T to the anoxic zone A. During the process, residence time of wastewater in the medium-aerobic zone S is set to about 2.0 - 3.0 hours, and oxygenation is maintained in the range of 0.6 - 0.8 mg O₂/litre, whereas residence time of wastewater in the aerobic zone T is set to about 1.5 - 2.0 hours, and oxygenation in the range of 2.0 - 2.5 mg O₂/litre. In the anoxic zone A, oxygenation is maintained in the range of 0.1 - 0.6 mg O₂/litre. The selection of specific values of operating parameters for the zones, in particular for the medium-aerobic zone S, is made based on the characteristics of the wastewater brought. Internal and external recirculations are selected so that scheduled residence times in each zone can be obtained depending on the amount of wastewater incoming to the wastewater treatment plant. Level of the sludge maintained in the secondary settling tank should be 30 % or more of its active volume. Density of the active sludge is set depending on the amount of BOD₅ load brought together with the wastewater, within 4.0 and 9.0 g/l.

The invention is also applicable in bioreactors of carrousel-like structure and in sequential bioreactors, where the change of operating parameters in time takes place in one chamber by cyclical changes in oxygenation.

## Claims

1. A method of biological wastewater treatment, wherein a biological reactor comprising an anaerobic zone (B), an anoxic zone (A) and an aerobic zone (T), sequentially connected to each other, is used, wherein raw wastewater is brought to the anaerobic zone (B) located at the beginning of the said zone sequence of the reactor, or in part or in its entirety to the zone preceding it, then, the wastewater is directed to the anoxic zone (A) and eventually to the aerobic zone (T), afterwards, in the process of internal recirculation, a part of the content of the aerobic zone (T) is returned to the anoxic zone (A), and the rest of the wastewater from the aerobic zone (T) is directed together with the sludge, directly or through additional zones, to a secondary settling tank where the treated wastewater is separated from the sludge which sediments on the bottom of the secondary settling tank, and the treated wastewater and excess sludge located on the bottom of the secondary settling tank are discharged outside the secondary settling tank, and the rest of the sludge accumulated in the secondary settling tank is passed to the anaerobic zone directly or via the anoxic zone in the process of external recirculation, **characterised in that**, between the anoxic zone (A) and the aerobic zone (T), a medium-aerobic zone (S) is maintained, where residence time of wastewater is selected from 2.0 to 8.0 hours, and oxygen concentration is maintained in the range of 0.6 to 1.3 mg of O₂/litre, an wherein in the course of the process, oxygen concentration in the aerobic zone (T) is maintained in the range of 1.7 to 4.0 mg O₂/litre and oxygen concentration in the anoxic zone (A) is maintained in the range of 0.1 to 0.6 mg O₂/litre.

2. The method of biological wastewater treatment according to claim 1 **characterised in that** residence time of wastewater in the aerobic zone (T) is selected from 1.0 to 4.0 hours.

3. The method of biological wastewater treatment according to any one of claims 1 or 2, **characterised in that** the flow of the sludge recirculated from the secondary settling tank is controlled in an appropriate proportion to the layer of sludge suspended above the bottom of the secondary settling tank, this layer being maintained above 30% of the useful volume of this settling tank.

4. The method of biological wastewater treatment according to any one of claims 1 or 2, or 3, **characterised in that** the density of the active sludge in the bioreactor is maintained in the range of 4.0 - 9.0 g/litre.

## Patentansprüche

1. Verfahren zur biologischen Abwasserbehandlung, wobei ein biologischer Reaktor mit einer anaeroben Zone (B), einer anoxischen Zone (A) und einer aeroben Zone (T), die aufeinanderfolgend miteinander verbunden sind, verwendet wird, wobei Rohabwasser in die anaerobe Zone (B), die sich am Anfang der genannten Zonenfolge des Reaktors befindet, teilweise oder vollständig zu der Zone, die ihr vorausgeht gebracht wird, dann, das Abwasser wird in die anoxische Zone (A) und schließlich in die aerobe Zone (T) geleitet, danach, im Verfahren der internen Rezirkulation wird ein Teil des Inhalts der aeroben Zone (T) in die anoxische Zone (A) zurückgeführt und der Rest des Abwassers aus der aeroben Zone (I) zusammen mit dem Schlamm, direkt oder durch zusätzliche Zonen, zu einem Nachklärbecken geleitet wird, wo das gereinigte Abwasser vom Schlamm, der sich am Boden des Nachklärbeckens absetzt, getrennt wird, und das behandelte Abwasser und der Überschussschlamm, der sich auf dem Boden des Nachklärbeckens befindet, aus dem Nachklärbecken abgelassen werden, und der Rest des Schlamms, der sich im Nachklärbecken angesammelt hat, direkt oder über die anoxische Zone in das Verfahren der externen Rezirkulation in die anaerobe Zone geleitet wird, **dadurch gekennzeichnet, dass** zwischen der anoxischen Zone (A) und der aeroben Zone (T) eine mittelaerobe Zone (S) aufrechterhalten wird, wo die Verweilzeit des Abwassers von 2,0 bis 8,0 Stunden gewählt wird und die Sauerstoffkonzentration im Bereich von 0,6 bis 1,3 mg O₂/Liter gehalten wird, und wobei im Verlauf des Verfahrens die Sauerstoffkonzentration in der aeroben Zone (T) im Bereich von 1,7 bis 4,0 mg O₂/Liter und die Sauerstoffkonzentration in der anoxischen Zone (A) im Bereich von 0,1 bis 0,6 mg O₂/Liter gehalten wird.

2. Verfahren zur biologischen Abwasserbehandlung nach Anspruch 1, **dadurch gekennzeichnet, dass** die Verweilzeit des Abwassers in der aeroben Zone (T) von 1,0 bis 4,0 Stunden gewählt wird.

3. Verfahren zur biologischen Abwasserbehandlung nach einem der Ansprüche 1 oder 2, **dadurch gekennzeichnet, dass** die Strömung des aus dem Nachklärbecken zurückgeführten Schlamms in einem geeigneten Verhältnis zu der oberhalb des Bodens des Nachklärbeckens suspendierten Schlammschicht gesteuert wird, wobei diese Schicht über 30% des Nutzvolumens dieses Klärbeckens gehalten wird.

4. Verfahren zur biologischen Abwasserbehandlung nach einem der Ansprüche 1 oder 2 oder 3, **dadurch gekennzeichnet, dass** die Dichte des aktiven Schlamms im Bioreaktor im Bereich von 4,0 bis 9,0 g/Liter gehalten wird.

## Revendications

1. Une méthode de traitement biologique des eaux usées, où l'on utilise un réacteur biologique comprenant une zone anaérobie (B), une zone anoxique (A) et une zone aérobie (T), connectées séquentiellement les unes aux autres, où les eaux usées brutes sont amenées à la zone anaérobie (B) située au début de ladite séquence de zones du réacteur, ou en partie ou dans son intégralité à la zone qui la précède, ensuite, les eaux usées sont dirigées à la zone anoxique (A) et finalement à la zone aérobie (T), après, dans le processus de recirculation interne, une partie du contenu de la zone aérobie (T) est renvoyée à la zone anoxique (A), et le reste des eaux usées de la zone aérobie (I) est dirigé avec la boue, directement ou à travers des zones supplémentaires, à un réservoir de décantation secondaire, où les eaux usées traitées sont séparées de la boue qui sédimente au fond du réservoir de décantation secondaire, et les eaux usées traitées et la boue en excès située au fond du réservoir de décantation secondaire sont évacuées à l'extérieur du réservoir de décantation secondaire, et le reste de la boue accumulée dans le réservoir de décantation secondaire est passé à la zone anaérobie directement ou via la zone anoxique dans le processus de recirculation externe, **caractérisé en ce que**, entre la zone anoxique (A) et la zone aérobie (T), une zone aérobie moyenne (S) est maintenue, où le temps de séjour des eaux usées est choisi de 2,0 à 8,0 heures, et la concentration d'oxygène est maintenue dans la gamme de 0,6 à 1,3 mg d'O₂/litre, et où au cours du processus, la concentration d'oxygène dans la zone aérobie (T) est maintenue dans la gamme de 1,7 à 4,0 mg d'O₂/litre, et la concentration d'oxygène dans la zone anoxique (A) est maintenue dans la gamme de 0,1 à 0,6 mg d'O₂/litre.

2. La méthode de traitement biologique des eaux usées selon la revendication 1, **caractérisée en ce que** le temps de séjour des eaux usées dans la zone aérobie (T) est choisi entre 1,0 et 4,0 heures.

3. La méthode de traitement biologique des eaux usées selon l'une quelconque des revendications 1 ou 2, **caractérisée en ce que** l'écoulement de la boue recirculée du réservoir de décantation secondaire est contrôlé dans une proportion appropriée à la couche de la boue suspendue au-dessus du fond du réservoir de décantation secondaire, cette couche étant maintenue au-dessus de 30% du volume utile de ce réservoir de décantation secondaire.

4. La méthode de traitement biologique des eaux usées selon l'une quelconque des revendications 1 ou 2, ou 3, **caractérisée en ce que** la densité de la boue active dans le bioréacteur est maintenue dans la gamme de 4,0 à 9,0 g/litre.
